# EUROPEAN PATENT APPLICATION

(11) **EP 4 618 622 A1**
(43) Date of publication of application: **17.09.2025**
(21) Application number: 23884697.6
(22) Date of filing: 25.10.2023
(51) Int. Cl.: H04W 36/00

(54) **COMMUNICATION METHOD, APPARATUS AND SYSTEM, AND STORAGE MEDIUM**

(30) Priority: 04.11.2022 CN 202211379552
(71) Applicant: Huawei Technologies Co., Ltd., Shenzhen, Guangdong 518129 (CN)
(72) Inventor: GU, Zhifang, Shenzhen, Guangdong 518129 (CN); FAN, Qiang, Shenzhen, Guangdong 518129 (CN); YOU, Chunhua, Shenzhen, Guangdong 518129 (CN); LI, Jiaojiao, Shenzhen, Guangdong 518129 (CN); MAO, Yingchao, Shenzhen, Guangdong 518129 (CN)
(74) Representative: Pfenning, Meinig & Partner mbB
(86) International application number: PCT/CN2023/126612
(87) International publication number: WO 2024/093765

(57) **Abstract**

This application discloses a communication method, apparatus, and system, and a storage medium. The method includes: A CU sends a first message to a DU, where the first message includes first configuration information and first indication information, and the first configuration information includes a configuration parameter used by a terminal to communicate with a serving cell; and the DU determines, based on the first indication information, whether to send the first configuration information to the terminal. According to the solution of this application, the first message that carries the first configuration information and that is sent by the CU also carries the first indication information, and the first configuration information includes the configuration parameter used by the terminal to communicate with the serving cell, so that the DU can determine, based on the first indication information, whether to send the first configuration information to the terminal. This can avoid a subsequent configuration error of the terminal, and improve reliability of configuration on the terminal.

## Description

This application claims priority to Chinese Patent Application No. 202211379552.9, filed with the China National Intellectual Property Administration on November 4, 2022 and entitled "COMMUNICATION METHOD, APPARATUS, AND SYSTEM, AND STORAGE MEDIUM", which is incorporated herein by reference in its entirety.

### TECHNICAL FIELD

This application relates to the field of communication technologies, and in particular, to a communication method, apparatus, and system, and a storage medium.

### BACKGROUND

In a mobile communication system, a communication link between a terminal and a network device changes due to movement of the terminal. The network device indicates, based on a movement status of the terminal, the terminal to perform cell handover.

L1/L2 triggered mobility (L1/L2 triggered mobility, LTM) means that handover-related operations are mainly performed at a physical layer (physical layer, PHY) and a medium access control (media access control, MAC) layer. In a central unit (central unit, CU)-distributed unit (distributed unit, DU) split architecture, an LTM handover decision is made by the DU, and the CU cannot sense an LTM execution status in time. Therefore, the CU may perform parameter reconfiguration on the terminal. When the terminal receives a reconfiguration message, the terminal may have been handed over to a new cell through the LTM. If the terminal still performs reconfiguration based on the received reconfiguration message, a configuration error may be caused, and a configuration of the terminal may not be aligned with that of the network device. As a result, problems such as a communication failure may occur.

In view of this, how to avoid a configuration failure or a communication failure caused by a subsequent configuration error of the terminal when the terminal receives an invalid, outdated, or incorrect configuration, and improve reliability of configuration on the terminal is a problem that needs to be resolved in this application.

### SUMMARY

This application provides a communication method, apparatus, and system, and a storage medium, to improve reliability of configuration on a terminal.

According to a first aspect, a communication method is provided. The method includes: A DU receives a first message from a CU, where the first message includes first configuration information and first indication information, and the first configuration information includes a configuration parameter used by a terminal to communicate with a serving cell; and the DU determines, based on the first indication information, whether to send the first configuration information to the terminal. In this aspect, the first message that carries the first configuration information and that is sent by the CU also carries the first indication information, and the first configuration information includes the configuration parameter used by the terminal to communicate with the serving cell, so that the DU can determine, based on the first indication information, whether to send the first configuration information to the terminal. This can avoid a subsequent configuration error of the terminal, and improve reliability of configuration on the terminal.

In a possible implementation, before that a DU receives a first message from a CU, the method further includes: The DU sends a handover command to the terminal; and that the DU determines, based on the first indication information, whether to send the first configuration information to the terminal includes: When the first indication information indicates that the first configuration information corresponds to a cell of the terminal before handover, the DU determines not to send the first configuration information to the terminal; or when the first indication information indicates that the first configuration information corresponds to a cell of the terminal after handover, the DU determines to send the first configuration information to the terminal. In this implementation, the terminal is to perform handover. If the first configuration information is for the cell of the terminal before the handover, the DU determines that the first configuration information is invalid or incorrect. Therefore, the DU determines not to send the first configuration information to the terminal, so that the reliability of configuration on the terminal can be improved.

In another possible implementation, that the DU determines, based on the first indication information, whether to send the first configuration information to the terminal includes: When the first indication information includes an identifier of the cell before the handover, the DU determines not to send the first configuration information to the terminal; or when the first indication information includes an identifier of the cell after the handover, the DU determines to send the first configuration information to the terminal. In this implementation, when the first indication information includes the identifier of the cell before the handover, it indicates that the first configuration information corresponds to the cell of the terminal before the handover, the DU considers that the first configuration information is an invalid or incorrect configuration, and the DU determines not to send the first configuration to the terminal. When the first indication information includes the identifier of the cell of the terminal after the handover, it indicates that the first configuration information corresponds to the cell of the terminal after the handover, the DU considers that the first configuration information is a valid or correct configuration, and the DU determines to send the first configuration information to the terminal.

In still another possible implementation, when the first indication information is a first value, the DU determines not to send the first configuration information to the terminal; or when the first indication information is a second value, the DU determines to send the first configuration information to the terminal, where a value of the first indication information is associated with a quantity of times of sending a second notification message, the second notification message notifies that a handover process is completed, and a value assignment manner of the first indication information includes at least one of the following: toggle and accumulation.

In still another possible implementation, the second notification message includes at least one of the following information: an identifier of the cell after the handover and an F1 application protocol identifier.

In still another possible implementation, the method further includes: The DU sends a first notification message to the CU, where the first notification message notifies whether the first configuration information has been sent to the terminal.

In still another possible implementation, the first message further includes second indication information, and the second indication information indicates whether the first configuration information is related to whether the terminal performs LTM handover; and the method further includes: When the second indication information indicates that the first configuration information is related to whether the terminal performs LTM handover, the DU determines not to send the first configuration information to the terminal; or when the second indication information indicates that the first configuration information is irrelevant to whether the terminal performs LTM handover, the DU determines to send the first configuration information to the terminal. In this implementation, the first message that carries the first configuration information and that is sent by the CU also carries the second indication information, and the second indication information indicates whether the first configuration information is related to whether the terminal performs LTM handover, so that the DU can determine, based on the second indication information, whether to send the first configuration information to the terminal. This can avoid a subsequent configuration error of the terminal, and improve reliability of configuration on the terminal.

According to a second aspect, a communication method is provided. The method includes: A CU sends a first message to a DU, where the first message includes first configuration information and first indication information, and the first configuration information includes a configuration parameter used by a terminal to communicate with a serving cell; and the CU receives a first notification message from the DU, where the first notification message notifies whether the first configuration information has been sent to the terminal.

In a possible implementation, the first indication information indicates that the first configuration information corresponds to a cell of the terminal before handover, or the first indication information indicates that the first configuration information corresponds to a cell of the terminal after handover.

In another possible implementation, the first message further includes second indication information, and the second indication information indicates whether the first configuration information is related to whether the terminal performs LTM handover.

According to a third aspect, a communication method is provided. The method includes: A distributed unit DU receives a first message from a central unit CU, where the first message includes first configuration information, and the first configuration information includes a configuration parameter used by a terminal to communicate with a serving cell; and when the first configuration information is received before the DU sends a first notification message to the CU, the DU determines not to send the first configuration information to the terminal; or when the first configuration information is received after the DU sends a first notification message to the CU, the DU determines to send the first configuration information to the terminal, where the first notification message notifies that the terminal completes handover. In this aspect, the DU determines, based on whether the first configuration information is received before or after the second notification message is sent to the CU, whether to send the first configuration information to the terminal. This can avoid a subsequent configuration error of the terminal, and improve reliability of configuration on the terminal.

In a possible implementation, the method further includes: The DU stores a first identifier, where the first identifier is used to record whether the DU has sent the first notification message to the CU.

In another possible implementation, the method further includes: The DU sends a second notification message to the CU, where the second notification message notifies whether the first configuration information has been sent to the terminal.

According to a fourth aspect, a communication method is provided. The method includes: A CU sends a first message to a DU, where the first message includes first configuration information, and the first configuration information includes a configuration parameter used by a terminal to communicate with a serving cell; and when the first configuration information is sent before the CU receives a first notification message, the CU receives a second notification message from the DU, where the second notification message notifies that the DU has not sent the first configuration information to the terminal; or when the first configuration information is sent after the CU receives a first notification message, the CU receives a third notification message from the DU, where the third notification message notifies that the DU has sent the first configuration information to the terminal, and the first notification message indicates that the terminal completes LTM handover.

In a possible implementation, the method further includes: The CU receives the first notification message.

According to a fifth aspect, a communication method is provided. The method includes: A DU receives a layer 1 measurement report from a terminal, and starts a handover process; the DU sends a modification request message to a central unit CU, where the modification request message is used to request to modify a configuration parameter used by the terminal managed by the DU to communicate with a serving cell; the DU determines to suspend the handover process; and the DU receives first configuration information from the CU, where the first configuration information includes the configuration parameter used by the terminal to communicate with the serving cell. In this aspect, the DU determines, based on whether a reconfigured parameter in the first configuration information is initiated by the DU or the CU, whether to send the first configuration information to the terminal device. This can avoid a subsequent configuration error of the terminal, and improve reliability of configuration on the terminal.

In a possible implementation, the method further includes: The DU sends the first configuration information to the terminal; the DU receives a response message from the terminal, where the response message indicates that the first configuration information is successfully received; and the DU determines to resume the handover process.

In another possible implementation, the method further includes: The DU receives second configuration information from the CU, where the second configuration information includes a parameter managed by the CU; and the DU determines not to suspend the handover process.

According to a sixth aspect, a communication method is provided. The method includes: A CU sends first indication information to a DU, where the first indication information indicates to deactivate a handover process; and the CU sends first configuration information to the DU, where the first configuration information includes a configuration parameter used by a terminal to communicate with a serving cell. In this aspect, the CU controls the DU to perform activation or deactivation of an LTM handover decision, so that a subsequent configuration error of the terminal can be avoided, and reliability of configuration on the terminal is improved.

In a possible implementation, after that a CU sends first indication information to a DU, the method further includes: receiving response information, where the response information indicates whether the first indication information is successfully received, or indicates whether the handover process is successfully deactivated.

In another possible implementation, when the response information indicates that the first indication information is not successfully received or indicates that the LTM process is not successfully deactivated, the response information includes a cause value, and the cause value indicates that the terminal is executing the handover process.

In still another possible implementation, after that the CU sends first configuration information to the DU, the method further includes: The CU sends second indication information to the DU, where the second indication information indicates to reactivate the handover process.

In still another possible implementation, the first configuration information and the second indication information are included in a first message.

According to a seventh aspect, a communication method is provided. The method includes: A CU receives a notification message from a DU, where the notification message notifies that a terminal is to perform handover; and the CU stops performing radio resource control reconfiguration on the terminal.

According to an eighth aspect, a communication apparatus is provided, to implement the communication method according to the first aspect. For example, the communication apparatus may be a DU or a DU chip system. The foregoing method may be implemented by software, hardware, or hardware executing corresponding software.

In a possible implementation, the communication apparatus includes a transceiver unit and a processing unit. The transceiver unit is configured to receive a first message from a CU, where the first message includes first configuration information and first indication information, and the first configuration information includes a configuration parameter used by a terminal to communicate with a serving cell; and the processing unit is configured to determine, based on the first indication information, whether to send the first configuration information to the terminal.

Optionally, the transceiver unit is further configured to send a handover command to the terminal; and the processing unit is further configured to: when the first indication information indicates that the first configuration information corresponds to a cell of the terminal before handover, determine not to send the first configuration information to the terminal; or the processing unit is further configured to: when the first indication information indicates that the first configuration information corresponds to a cell of the terminal after handover, determine to send the first configuration information to the terminal.

Optionally, the processing unit is further configured to: when the first indication information includes an identifier of the cell before the handover, determine not to send the first configuration information to the terminal; or the processing unit is further configured to: when the first indication information includes an identifier of the cell after the handover, determine to send the first configuration information to the terminal.

Optionally, the processing unit is further configured to: when the first indication information is a first value, determine not to send the first configuration information to the terminal; or the processing unit is further configured to: when the first indication information is a second value, determine to send the first configuration information to the terminal, where a value of the first indication information is associated with a quantity of times of sending a second notification message, the second notification message notifies that a handover process is completed, and a value assignment manner of the first indication information includes at least one of the following: toggle and accumulation.

Optionally, the second notification message includes at least one of the following information: an identifier of the cell after the handover and an F1 application protocol identifier.

Optionally, the transceiver unit is further configured to send a first notification message to the CU, where the first notification message notifies whether the first configuration information has been sent to the terminal.

Optionally, the first message further includes second indication information, where the second indication information indicates whether the first configuration information is related to whether the terminal performs LTM handover; and the processing unit is further configured to: when the second indication information indicates that the first configuration information is related to whether the terminal performs LTM handover, determine not to send the first configuration information to the terminal; or the processing unit is further configured to: when the second indication information indicates that the first configuration information is irrelevant to whether the terminal performs LTM handover, determine to send the first configuration information to the terminal.

According to a ninth aspect, a communication apparatus is provided, to implement the communication method according to the second aspect. For example, the communication apparatus may be a CU or a CU chip system. The foregoing method may be implemented by software, hardware, or hardware executing corresponding software.

In a possible implementation, the communication apparatus includes a transceiver unit and a processing unit. The transceiver unit is configured to send a first message to a DU, where the first message includes first configuration information and first indication information, and the first configuration information includes a configuration parameter used by a terminal to communicate with a serving cell; and the transceiver unit is further configured to receive a first notification message from the DU, where the first notification message notifies whether the first configuration information has been sent to the terminal.

Optionally, the first indication information indicates that the first configuration information corresponds to a cell of the terminal before handover, or the first indication information indicates that the first configuration information corresponds to a cell of the terminal after handover.

Optionally, the first message further includes second indication information, and the second indication information indicates whether the first configuration information is related to whether the terminal performs LTM handover.

According to a tenth aspect, a communication apparatus is provided, to implement the communication method according to the third aspect. For example, the communication apparatus may be a DU or a DU chip system. The foregoing method may be implemented by software, hardware, or hardware executing corresponding software.

In a possible implementation, the communication apparatus includes a transceiver unit and a processing unit. The transceiver unit is configured to receive a first message from a central unit CU, where the first message includes first configuration information, and the first configuration information includes a configuration parameter used by a terminal to communicate with a serving cell; and the processing unit is configured to: when the first configuration information is received before the DU sends a first notification message to the CU, determine not to send the first configuration information to the terminal; or the processing unit is configured to: when the first configuration information is received after the DU sends a first notification message to the CU, determine to send the first configuration information to the terminal, where the first notification message notifies that the terminal completes handover.

Optionally, the processing unit is further configured to store a first identifier, where the first identifier is used to record whether the DU has sent the first notification message to the CU.

Optionally, the transceiver unit is further configured to send a second notification message to the CU, where the second notification message notifies whether the first configuration information has been sent to the terminal.

According to an eleventh aspect, a communication apparatus is provided, to implement the communication method according to the fourth aspect. For example, the communication apparatus may be a CU or a CU chip system. The foregoing method may be implemented by software, hardware, or hardware executing corresponding software.

In a possible implementation, the communication apparatus includes a transceiver unit and a processing unit. The transceiver unit is configured to send a first message to a DU, where the first message includes first configuration information, and the first configuration information includes a configuration parameter used by a terminal to communicate with a serving cell; and the transceiver unit is configured to: when the first configuration information is sent before the CU receives a first notification message, receive a second notification message from the DU, where the second notification message notifies that the DU has not sent the first configuration information to the terminal; or the transceiver unit is configured to: when the first configuration information is sent after the CU receives a first notification message, receive a third notification message from the DU, where the third notification message notifies that the DU has sent the first configuration information to the terminal, and the first notification message indicates that the terminal completes LTM handover.

Optionally, the transceiver unit is further configured to receive the first notification message.

According to a twelfth aspect, a communication apparatus is provided, to implement the communication method according to the fifth aspect. For example, the communication apparatus may be a DU or a DU chip system. The foregoing method may be implemented by software, hardware, or hardware executing corresponding software.

In a possible implementation, the communication apparatus includes a transceiver unit and a processing unit. The transceiver unit is configured to receive a layer 1 measurement report from a terminal, and start a handover process; the transceiver unit is further configured to send a modification request message to a central unit CU, where the modification request message is used to request to modify a configuration parameter used by the terminal managed by the DU to communicate with a serving cell; the processing unit is configured to determine to suspend the handover process; and the transceiver unit is further configured to receive first configuration information from the CU, where the first configuration information includes the configuration parameter used by the terminal to communicate with the serving cell.

Optionally, the transceiver unit is further configured to send the first configuration information to the terminal; the transceiver unit is further configured to receive a response message from the terminal, where the response message indicates that the first configuration information is successfully received; and the processing unit is further configured to determine to resume the handover process.

Optionally, the transceiver unit is further configured to receive second configuration information from the CU, where the second configuration information includes a parameter managed by the CU; and the processing unit is further configured to determine not to suspend the handover process.

According to a thirteenth aspect, a communication apparatus is provided, to implement the communication method according to the sixth aspect. For example, the communication apparatus may be a CU or a CU chip system. The foregoing method may be implemented by software, hardware, or hardware executing corresponding software.

In a possible implementation, the communication apparatus includes a transceiver unit and a processing unit. The transceiver unit is configured to send first indication information to a DU, where the first indication information indicates to deactivate a handover process; and the transceiver unit is further configured to send first configuration information to the DU, where the first configuration information includes a configuration parameter used by a terminal to communicate with a serving cell.

Optionally, the transceiver unit is further configured to receive response information, where the response information indicates whether the first indication information is successfully received, or indicates whether the handover process is successfully deactivated.

Optionally, when the response information indicates that the first indication information is not successfully received or indicates that the LTM process is not successfully deactivated, the response information includes a cause value, and the cause value indicates that the terminal is executing the handover process.

Optionally, the transceiver unit is further configured to send second indication information to the DU, where the second indication information indicates to reactivate the handover process.

Optionally, the first configuration information and the second indication information are included in a first message.

According to a fourteenth aspect, a communication apparatus is provided, to implement the communication method according to the seventh aspect. For example, the communication apparatus may be a CU or a CU chip system. The foregoing method may be implemented by software, hardware, or hardware executing corresponding software.

In a possible implementation, the communication apparatus includes a transceiver unit and a processing unit. The transceiver unit is configured to receive a notification message from a DU, where the notification message notifies that a terminal is to perform handover; and the processing unit is configured to stop performing radio resource control reconfiguration on the terminal.

With reference to any one of the eighth aspect to the fourteenth aspect, in still another possible implementation, the communication apparatus according to any one of the eighth aspect to the fourteenth aspect includes a processor coupled to a memory, and the processor is configured to support the apparatus in performing a corresponding function in the foregoing communication method. The memory is configured to be coupled to the processor, and stores a program (instructions) and/or data necessary for the apparatus. Optionally, the communication apparatus may further include a communication interface, configured to support communication between the apparatus and another network element. Optionally, the memory may be located inside the communication apparatus, or may be located outside the communication apparatus.

With reference to any one of the eighth aspect to the fourteenth aspect, in still another possible implementation, the communication apparatus according to any one of the eighth aspect to the fourteenth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or by executing code instructions. The transceiver apparatus may be a transceiver, a transceiver circuit, or an input/output interface, and is configured to receive a signal from an apparatus other than the communication apparatus and transmit the signal to the processor, or transmit a signal from the processor to an apparatus other than the communication apparatus. When the communication apparatus is a chip, the transceiver apparatus is a transceiver circuit or an input/output interface.

When the communication apparatus according to any one of the eighth aspect to the fourteenth aspect is a chip or a chip module, a sending unit may be an output unit, for example, an output circuit or a communication interface; and a receiving unit may be an input unit, for example, an input circuit or a communication interface. When the communication apparatus is a terminal or an access network device, a sending unit may be a transmitter or a transmitter machine; and a receiving unit may be a receiver or a receiver machine.

According to a fifteenth aspect, a computer-readable storage medium is provided. The computer-readable storage medium stores a computer program or instructions. When a computer executes the computer program or the instructions, the methods according to the foregoing aspects are implemented.

According to a sixteenth aspect, a computer program product including instructions is provided. When the instructions are run on a communication apparatus, the communication apparatus is enabled to perform the methods according to the foregoing aspects.

According to a seventeenth aspect, a communication system is provided. The communication system includes the communication apparatus according to any one of the eighth aspect to the fourteenth aspect.

### BRIEF DESCRIPTION OF DRAWINGS

FIG. 1 is a diagram of an architecture of a communication system 1000 to which an embodiment of this application is applied;
FIG. 2 is a diagram of a CU-DU architecture according to an embodiment of this application;
FIG. 3 is a diagram of an existing LTM handover procedure;
FIG. 4 is a schematic flowchart of an example of causing a reconfiguration error in an LTM handover process;
FIG. 5 is a schematic flowchart of a communication method according to an embodiment of this application;
FIG. 6 is a schematic flowchart of another communication method according to an embodiment of this application;
FIG. 7 is a schematic flowchart of still another communication method according to an embodiment of this application;
FIG. 8 is a schematic flowchart of still another communication method according to an embodiment of this application;
FIG. 9 is a diagram of an example of configuration information according to an embodiment of this application;
FIG. 10 is a schematic flowchart of still another communication method according to an embodiment of this application;
FIG. 11 is a schematic flowchart of still another communication method according to an embodiment of this application;
FIG. 12 is a schematic flowchart of still another communication method according to an embodiment of this application;
FIG. 13 is a diagram of a structure of a communication apparatus according to an embodiment of this application; and
FIG. 14 is a diagram of a structure of another communication apparatus according to an embodiment of this application.

### DESCRIPTION OF EMBODIMENTS

The following describes embodiments of this application with reference to accompanying drawings in embodiments of this application.

Embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

It should be further understood that embodiments of this application may be further applied to various non-orthogonal multiple access technology-based communication systems, for example, a sparse code multiple access (sparse code multiple access, SCMA) system. Certainly, SCMA may also be referred to as another name in the communication field. Further, the technical solutions in embodiments of this application may be applied to a multi-carrier transmission system using the non-orthogonal multiple access technology, for example, an orthogonal frequency division multiplexing (orthogonal frequency division multiplexing, OFDM) system using the non-orthogonal multiple access technology, a filter bank multi-carrier (filter bank multi-carrier, FBMC) system, a generalized frequency division multiplexing (generalized frequency division multiplexing, GFDM) system, and a filtered-orthogonal frequency division multiplexing (filtered-OFDM, F-OFDM) system.

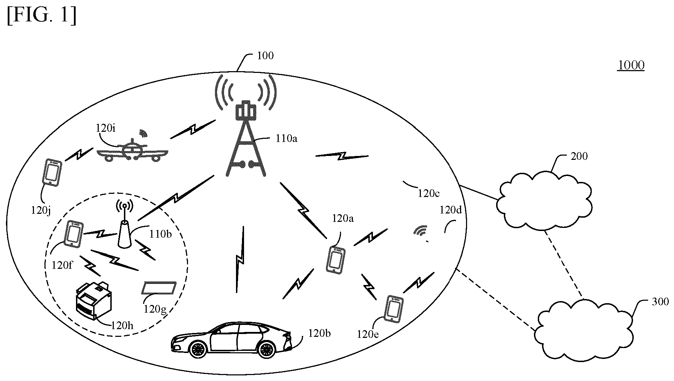

FIG. 1 is a diagram of an architecture of a communication system 1000 to which an embodiment of this application is applied. As shown in FIG. 1, the communication system includes a radio access network 100 and a core network 200. Optionally, the communication system 1000 may further include the Internet 300. The radio access network 100 may include at least one radio access network device (for example, 110a and 110b in FIG. 1), and may further include at least one terminal (for example, 120a to 120j in FIG. 1). The core network 200 may include one or more core network devices. The terminal is connected to the radio access network device in a wireless manner, and the radio access network device is connected to the core network device in a wireless or wired manner. The core network device and the radio access network device may be different physical devices that are independent of each other, or a function of the core network device and a logical function of the radio access network device may be integrated into a same physical device, or some functions of the core network device and some functions of the radio access network device may be integrated into one physical device. A wired or wireless manner may be used for connection between terminals and between radio access network devices. FIG. 1 is merely a diagram. The communication system may further include another network device, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation base station (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like. Alternatively, the radio access network device may be a module or a unit that completes some functions of a base station, for example, may be a central unit (central unit, CU) or a distributed unit (distributed unit, DU). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the following provides descriptions by using an example in which the radio access network device is a base station.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self-driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in embodiments of this application.

The base station and the terminal may be fixed or movable. The base station and the terminal may be deployed on land, including an indoor device, an outdoor device, a handheld device, or a vehicle-mounted device; may be deployed on water; or may be deployed on an airplane, a balloon, and an artificial satellite in the air. An application scenario of the base station and the terminal is not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed according to a radio air interface protocol. Certainly, communication between 110a and 120i may alternatively be performed according to an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base stations, or between the terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

In embodiments of this application, a time domain symbol may be an orthogonal frequency division multiplexing (orthogonal frequency division multiplexing, OFDM) symbol or a discrete Fourier transform-spread-OFDM (Discrete Fourier Transform-spread-OFDM, DFT-s-OFDM) symbol. Unless otherwise specified, symbols in embodiments of this application are time domain symbols.

It may be understood that, in embodiments of this application, a physical downlink shared channel (physical downlink shared channel, PDSCH), a physical downlink control channel (physical downlink control channel, PDCCH), and a physical uplink shared channel (physical uplink shared channel, PUSCH) are merely respectively examples of a downlink data channel, a downlink control channel, and an uplink data channel respectively. In different systems and different scenarios, a data channel and a control channel may have different names. This is not limited in embodiments of this application.

It should be noted that the terms "system" and "network" in embodiments of this application may be used interchangeably.

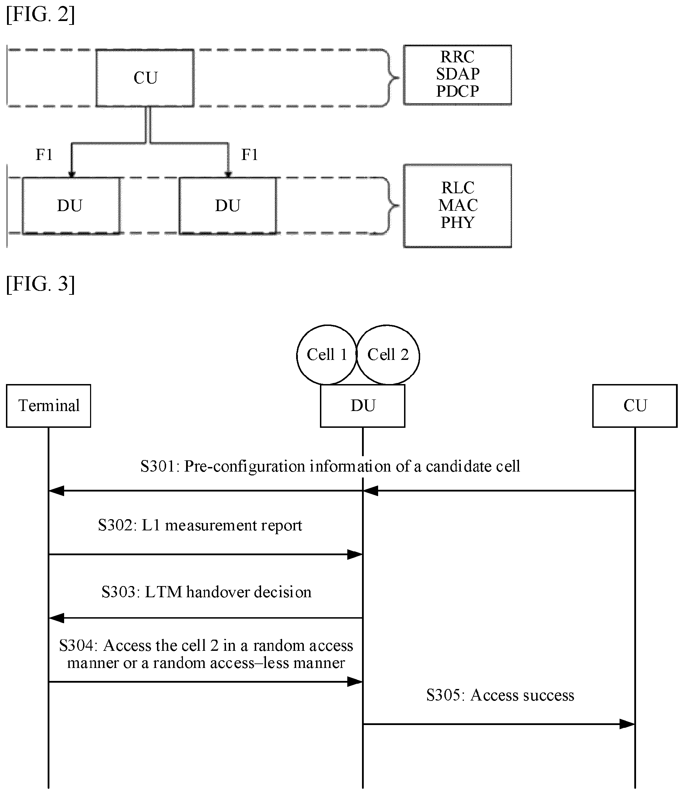

FIG. 2 is a diagram of a CU-DU architecture according to an embodiment of this application. One radio access network device may be logically divided into one CU and one or more DUs. Each DU is connected to the CU through an F1 logical interface. Operations related to a radio link control (radio link control, RLC) layer, a medium access control (media access control, MAC) layer, and a physical layer (physical layer, PHY) are processed by the DU. Operations related to a service data adaptation protocol (service data adaptation protocol, SDAP) layer, a radio resource control (radio resource control, RRC) layer, and a packet data convergence protocol (packet data convergence protocol, PDCP) layer are processed by the CU.

### About LTM:

A layer 1 (layer 1, L1) is a physical layer, and a layer 2 (layer 2, L2) is one or more of the MAC layer, the RLC layer, the PDCP layer, and the SDAP layer. L1/L2 may also be understood as L1 and/or L2, in other words, L1 and/or L2 mainly participate in an LTM handover process. For example, a terminal sends a L1 measurement result to an access network device by using physical layer control signaling (carried on a PUCCH). A physical layer of the access network device reads the L1 measurement result, and sends, based on the measurement result, a handover decision made by the access network device to the terminal by using L1/L2 signaling. The L1/L2 signaling may be a message carried on a PDCCH, or may be a message carried on a MAC control element (MAC control element, MAC CE).

A specific name of a handover technology is not limited in this application. LTM handover may also be referred to as low layer handover, lower layer handover, or the like. The L1/L2 handover means that handover-related operations are mainly performed at the physical layer and the MAC layer. However, a conventional handover is managed by a layer 3 (layer 3, L3) (that is, an RRC layer).

For example, the following describes an LTM handover procedure. Intra-DU cell handover in a CU-DU split architecture is used as an example. FIG. 3 is a diagram of an existing LTM handover procedure. A terminal is handed over from a cell (cell) 1 to a cell 2 by using an LTM technology.

Step S301: A CU sends pre-configuration information of an LTM candidate cell (pre-configuration of candidate cells) to the terminal. It may be understood that a message sent by the CU to the terminal needs to be sent via the DU. The pre-configuration information includes a parameter of one or more candidate cells of the cell 1.

Step S302: The terminal measures a reference signal of a current serving cell and/or the candidate cell based on the configuration information, and reports a measurement result to the current serving cell (for example, the cell 1 in the figure), in other words, sends a layer 1 measurement report (L1 report) to an access network device (the DU in the figure) to which the current serving cell belongs, where the layer 1 measurement report includes the measurement result. For example, the measurement result is an L1 measurement result, and includes at least one of the following: an L1 measurement result of the current serving cell and an L1 measurement result of at least one candidate cell. The L1 measurement result of the current serving cell and/or the candidate cell may be a cell-level measurement result, for example, cell-level reference signal received power (reference signal received power, RSRP), or may be a beam-level measurement result, for example, beam-level RSRP.

Step S303: The DU makes a handover decision based on the L1 measurement result. For example, when signal quality of a candidate cell is better than that of the current serving cell, the DU decides the terminal to hand over to the candidate cell. In this case, the candidate cell may also be referred to as a cell after handover (for example, the cell 2 in the figure). The DU sends an LTM handover command (LTM HO command) to the terminal by using L1/L2 signaling, where the LTM handover command includes identity information of the cell after the handover. Further, the LTM handover command may indicate beam direction information that may be used when the terminal communicates with the cell after the handover.

Step S304: The terminal performs LTM handover, uses the configuration information that is of the candidate cell and that is received in step S301 to access the cell after the handover, and after the access succeeds, starts to perform uplink and downlink data transmission with the cell after the handover. Further, the terminal may access the cell after the handover through a random access channel (random access channel, RACH) in a random access manner, or access the cell after the handover in a random access-less (RACH-less) manner.

Step S305: The DU notifies the CU of information indicating that the terminal successfully completes the LTM handover. For example, the DU may notify the CU of identification information of the cell after the handover.

In this embodiment of this application, a process of communication between the terminal and a cell may be understood as that the terminal communicates with an access network device to which the cell belongs.

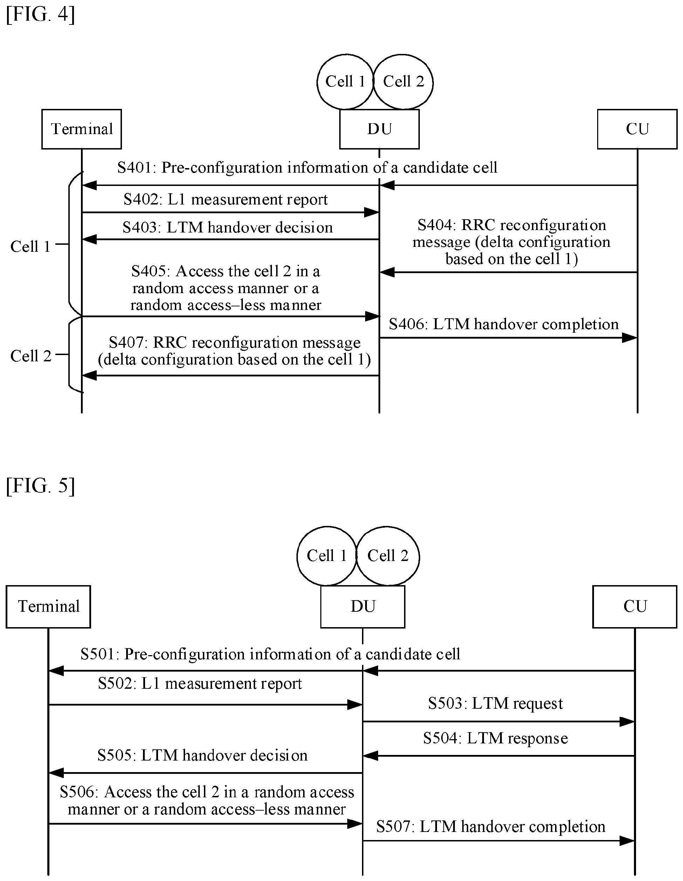

However, FIG. 4 is a schematic flowchart of an example of causing a reconfiguration error in an LTM handover process. The procedure includes the following steps.

Step S401: A CU sends pre-configuration information of an LTM candidate cell to a terminal. For a specific implementation of this step, refer to step S301.

Step S402: The terminal measures a reference signal of a current serving cell and/or a candidate cell based on the configuration information, and reports a measurement result to the current serving cell (for example, a cell 1 in the figure), in other words, sends a layer 1 measurement report (L1 report) to an access network device (a DU in the figure) to which the current serving cell belongs. For a specific implementation of this step, refer to step S302.

Step S403: The DU makes a handover decision based on the L1 measurement result, and sends an LTM handover command to the terminal by using L1/L2 signaling. For a specific implementation of this step, refer to step S303.

Step S404: The CU sends an RRC reconfiguration (RRC reconfiguration) message to the DU. The RRC reconfiguration message includes a delta configuration based on the cell 1.

Step S405: The terminal performs LTM handover, uses the configuration information that is of the candidate cell and that is received in step S401 to access a cell after the handover, and after the access succeeds, starts to perform uplink and downlink data transmission with the cell after the handover. For a specific implementation of this step, refer to step S304.

Step S406: The DU notifies the CU of information indicating that the terminal successfully completes the LTM handover. For example, the DU may notify the CU of identification information of the cell after the handover. For a specific implementation of this step, refer to step S305.

Step S407: The DU sends the received RRC reconfiguration to the terminal.

Because the DU makes an LTM decision, but the CU cannot sense an LTM execution status in time, the CU may perform parameter reconfiguration on the terminal. For example, in this embodiment, when the terminal is still in the cell 1, the CU delivers the RRC reconfiguration message. The message is the delta configuration based on the current cell 1 (delta configuration based on the cell 1), in other words, only a parameter that needs to be changed is placed in the configuration message.

However, in this period of time, the DU makes the LTM handover decision, and the terminal is handed over from the cell 1 to the cell 2.

The terminal may make, based on a configuration of the cell 2, the RRC delta configuration sent by the CU effective. As a result, configuration fails, and even communication may fail. Reliability of configuration on the terminal is poor.

In other words, the DU makes an LTM decision, but the CU cannot sense an LTM handover status in time. Therefore, the CU may perform reconfiguration on the terminal. When the reconfiguration message is received by the terminal, the terminal may have been handed over to a new cell through the LTM. If the terminal still performs reconfiguration based on the old reconfiguration message, a configuration error of the terminal may occur, or a configuration of the terminal may not be aligned with that of the access network device. As a result, problems such as a communication failure occur.

In view of this, embodiments of this application provide a communication solution.

FIG. 5 is a schematic flowchart of a communication method according to an embodiment of this application. For example, the method may include the following steps.

Step S501: A CU sends pre-configuration information of an LTM candidate cell to a terminal. For a specific implementation of this step, refer to step S301.

Step S502: The terminal measures a reference signal of a current serving cell and/or a candidate cell based on the configuration information, and reports a measurement result to the current serving cell (for example, a cell 1 in the figure), in other words, sends a layer 1 measurement report (L1 report) to an access network device (a DU in the figure) to which the current serving cell belongs. For a specific implementation of this step, refer to step S302.

Step S503: Before making a handover decision based on an L1 measurement result, the DU sends an LTM request (LTM request) to the CU. The LTM request indicates that the terminal is to perform LTM handover, or indicates that the DU is to make the handover decision, or indicates that the DU is to send an LTM handover command to the terminal.

After receiving the LTM request, the CU may not execute the RRC reconfiguration process in the embodiment shown in FIG. 4, to avoid the foregoing problem of an incorrect configuration.

Step S504: The CU sends an LTM response (LTM acknowledgement) to the DU. The LTM response indicates that the CU has received the LTM request.

Step S505: After receiving the LTM response of the CU, the DU makes the handover decision based on the L1 measurement result, and sends the LTM handover command to the terminal by using L1/L2 signaling. For a specific implementation of this step, refer to step S303.

Step S506: The terminal performs the LTM handover, uses the configuration information that is of the candidate cell and that is received in step S501 to access a cell after the handover, and after the access succeeds, starts to perform uplink and downlink data transmission with the cell after the handover. For a specific implementation of this step, refer to step S304.

Step S507: The DU notifies the CU of information indicating that the terminal successfully completes the LTM handover. For example, the DU may notify the CU of identification information of the cell after the handover. For a specific implementation of this step, refer to step S305. After receiving the information in step S507, if the CU needs to perform reconfiguration on the terminal, the CU may generate configuration information based on the current serving cell of the terminal.

According to this embodiment, before making the LTM handover decision, the DU sends the LTM request to the CU, to notify the CU that the terminal is to perform the LTM handover. After receiving the LTM request, the CU suspends an RRC reconfiguration process for the terminal, and the DU makes the handover decision only after receiving the LTM response from the CU. This avoids a subsequent configuration error of the terminal, and improves reliability of configuration on the terminal.

However, according to the embodiment shown in FIG. 5, the DU needs to request an acknowledgment of the CU before making the handover decision, in other words, the DU needs to wait for the response of the CU before sending the LTM handover command, which may cause a delay.

The following provides an embodiment in which before LTM handover is performed, a CU sends a handover manner control message to a DU, where the control message indicates the DU to perform the LTM handover in Manner 1 or Manner 2. In Manner 1, the LTM handover is directly decided by the DU (for example, the LTM handover based on the procedure in FIG. 4). In Manner 2, the DU may initiate a request for the LTM handover to the CU, and the DU can deliver an LTM handover command only after the CU confirms the LTM handover (for example, the LTM handover based on the procedure in FIG. 5). The CU may select Manner 1 or Manner 2 based on a service type of the terminal, and indicate Manner 1 or Manner 2 to the DU. For example, if a current service type of the terminal is a delay-sensitive service, and cell handover needs to be quickly completed to reduce service interruption, the CU may send handover manner control information to the DU, to indicate the DU to execute an LTM handover procedure in Manner 1. In this way, the DU can make a handover decision in time.

The following further provides another embodiment, so that a subsequent configuration error of the terminal can be avoided, reliability of configuration on the terminal is improved, and a DU can make a handover decision in time.

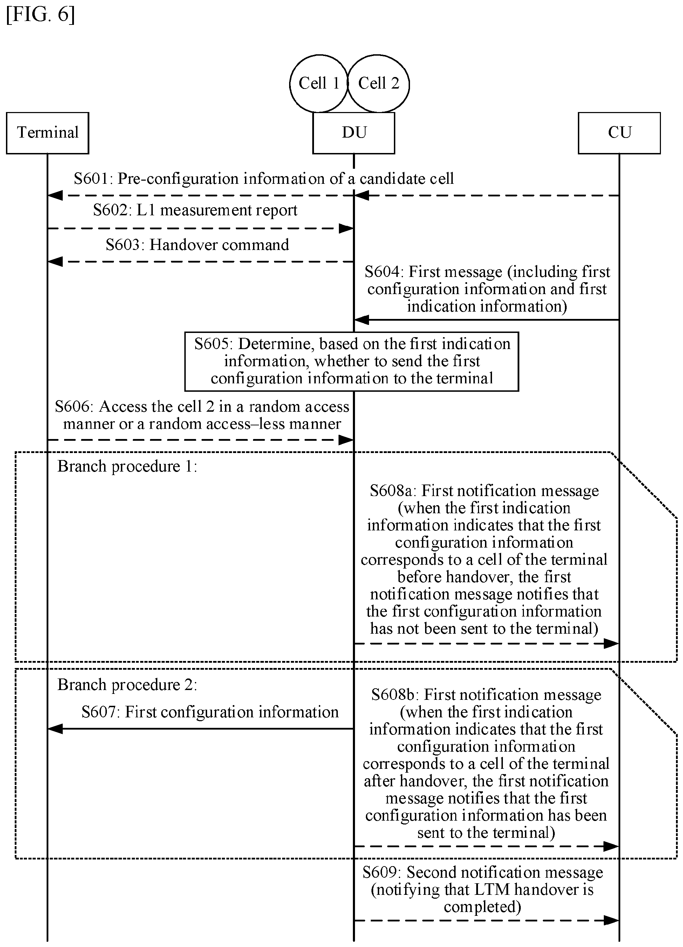

FIG. 6 is a schematic flowchart of another communication method according to an embodiment of this application. For example, the method may include the following steps.

Step S601: A CU sends pre-configuration information of an LTM candidate cell to a terminal. For a specific implementation of this step, refer to step S301.

Step S602: The terminal measures a reference signal of a current serving cell and/or a candidate cell based on the configuration information, and reports a measurement result to the current serving cell (for example, a cell 1 in the figure), in other words, sends a layer 1 measurement report (L1 report) to an access network device (a DU in the figure) to which the current serving cell belongs. For a specific implementation of this step, refer to step S302.

Step S603: The DU makes a handover decision based on the L1 measurement result, and sends an LTM handover command to the terminal by using L1/L2 signaling. For a specific implementation of this step, refer to step S303.

The method may be applied to an LTM handover scenario, or may be applied to another scenario. Therefore, steps S601 to S603 are optional steps, and are represented by dashed lines in the figure.

Step S604: The CU sends a first message to the DU.

The first message includes first configuration information and first indication information. The first configuration information includes a configuration parameter used by the terminal to communicate with the serving cell. The serving cell is a cell that currently provides a communication service for the terminal. The CU does not know that the DU sends the handover command to the terminal, and the CU sends the first configuration information to the DU based on the locally recorded serving cell of the terminal (where the terminal may be handed over, or the terminal may not be handed over).

For example, the first configuration information may be the foregoing RRC reconfiguration information, for example, physical layer parameter update, MAC layer parameter update, RLC layer parameter update, and PDCP layer parameter update of the serving cell. In a possible case, the first configuration message may be a reconfiguration message with synchronization (Reconfiguration with SYNC), to be specific, indicates one L3 cell handover and includes configuration information of a serving cell to which the terminal is to establish a connection, a to-be-updated key, and a cell identifier. For content of the first configuration information in this application, refer to the descriptions. Details are not described below again.

In this embodiment, before the CU sends the first message to the DU, the CU does not know that the DU sends the handover command to the terminal. To avoid a configuration error of the terminal caused by sending invalid or incorrect configuration information to the terminal, the first message further includes the first indication information.

For example, the first indication information indicates that the first configuration information corresponds to a cell of the terminal before handover or a cell of the terminal after handover.

For example, the first message may be an F1 interface message. Further, the F1 interface message may be a terminal context modification request message (UE context modification request message) or another F1 interface message. This is not limited in this embodiment.

In a possible scenario, time at which the DU receives the first message in step S604 is earlier than time at which the DU sends the LTM handover command, or steps S604 and S603 occur in short time. In this case, the DU has expected to make the LTM handover decision and is to send the LTM handover command. There may be two processing manners for the DU. In Manner (1), the DU temporarily does not send the first configuration information in the first message to the terminal, but first sends the LTM handover command (step S603), and then determines, in a manner of step S605, whether to send the first configuration information to the terminal. In Manner (2), the DU first sends the first configuration information to the terminal, and after the first configuration information is successfully sent (for example, the DU receives a response message of the terminal, indicating that the terminal receives the first configuration information), the DU sends the LTM handover command (step S603). In Manner (2), the first message does not need to include the first indication information, and S605 and subsequent steps are not needed. In Manner (1), S605 and subsequent steps are needed, to prevent the terminal from receiving an invalid or incorrect configuration. This scenario is also applicable to another embodiment of this application.

Step S605: The DU determines, based on the first indication information, whether to send the first configuration information to the terminal.

Because the DU has sent the LTM handover command to the terminal in step S603, if the first configuration information corresponds to the cell (for example, the cell 1) of the terminal before the handover, the DU should no longer forward the first configuration information to the terminal. Otherwise, the configuration error of the terminal is caused. Therefore, the DU determines, based on the first indication information, whether to send the first configuration information to the terminal.

For example, if the first indication information indicates that the first configuration information corresponds to the cell of the terminal before the handover, the DU considers that the first configuration information is invalid, and the DU may determine, based on the first indication information, not to send the first configuration information to the terminal. "Invalid" means that the terminal is to be handed over to a new cell, but the first configuration information corresponds to the cell of the terminal before the handover, so that the first configuration information cannot be used for the cell of the terminal after the handover.

If the first indication information indicates that the first configuration information corresponds to a cell (for example, a cell 2) of the terminal after the handover, the DU considers that the first configuration information is valid, and the DU may determine, based on the first indication information, to send the first configuration information to the terminal. "Valid" means that the terminal is to be handed over to a new cell, and the first configuration information corresponds to the cell of the terminal after the handover, so that the first configuration information may be used for the cell of the terminal after the handover.

Step S606: The terminal performs the LTM handover, uses the configuration information that is of the candidate cell and that is received in step S601 to access the cell after the handover, and after the access succeeds, starts to perform uplink and downlink data transmission with the cell after the handover. For a specific implementation of this step, refer to step S304. The method may be applied to the LTM handover scenario, or may be applied to another scenario. Therefore, step S606 is optional, and is represented by a dashed line in the figure.

Further, based on a determining result in step S605, the DU executes the following branch procedure 1 or branch procedure 2.

### Branch procedure 1:

Step S608a: When the first indication information indicates that the first configuration information corresponds to the cell of the terminal after the handover, the DU sends a first notification message to the CU, where the first notification message notifies that the DU has not sent the first configuration information to the terminal.

Specifically, if the first indication information indicates that the first configuration information corresponds to the cell of the terminal after the handover, the DU determines, based on the first indication information, not to send the first configuration information to the terminal, and the DU may further send the first notification message to the CU, where the first notification message notifies that the DU has not sent the first configuration information to the terminal.

Further, the first notification message may further include a first cause value, and the first cause value indicates that the LTM handover is being or is to be performed, or that another process is being executed on the terminal. Therefore, the CU may learn that the terminal is performing the LTM handover, and suspend performing RRC reconfiguration on the terminal.

Alternatively, the DU may not send the first notification message to the CU, and the CU may not know whether the sent first configuration information has been sent to the terminal. After the CU learns, in a subsequent procedure, that the terminal has completed the LTM handover, the CU does not communicate with the terminal through the cell before the handover, and no communication error is caused. Therefore, this step is optional, and is represented by a dashed line in the figure.

### Branch procedure 2:

Step S607: The first indication information indicates that the first configuration information corresponds to the cell of the terminal after the handover, and the DU sends the first configuration information to the terminal.

If the first indication information indicates that the first configuration information corresponds to the cell of the terminal after the handover, the DU has sent the LTM handover command to the terminal in step S603, the terminal is performing the LTM handover, and the first configuration information may be used by the terminal to perform communication in the cell after the handover, the DU sends the first configuration information to the terminal.

This step is optional, and is represented by a dashed line in the figure.

Step S608b: The DU sends a first notification message to the CU. The first notification message notifies that the DU has sent the first configuration information to the terminal.

Specifically, if the first indication information indicates that the first configuration information corresponds to the cell of the terminal after the handover, and the DU has sent the first configuration information to the terminal based on the first indication information, the DU may further send the first notification message to the CU, where the first notification message notifies that the DU has sent the first configuration information to the terminal.

In addition, in a scenario, the DU may not send the first notification message to the CU, and the CU may consider by default that the DU has sent the first configuration information to the terminal. Therefore, this step is optional, and is represented by a dashed line in the figure.

For example, when the first message is a terminal context modification request message, the corresponding first notification message may be a terminal context modification response message (UE context modification response message).

Step S609: The DU sends a second notification message to the CU. The second notification message indicates that the terminal has successfully completed the LTM handover. For a specific implementation of this step, refer to step S305. The method may be applied to the LTM handover scenario, or may be applied to another scenario. Therefore, step S609 is optional, and is represented by a dashed line in the figure.

Further, the second notification message may further include at least one of the following information: identification information of the cell after the handover and an F1 application protocol (F1 application protocol, F1AP) identifier. The F1 application protocol identifier is an identifier that needs to be changed for communication through an F1 interface after the current LTM handover, for example, an F1 application protocol identifier of user equipment on the DU side (gNB-DU UE F1AP ID). The DU includes the F1 application protocol identifier in the second notification message. In this way, if the CU still uses the F1 application protocol identifier before the LTM handover to send the RRC reconfiguration, the DU considers that the configuration is invalid and incorrect.

That the DU includes the F1 interface identifier in the second notification message may be implemented independently of steps S604 and S605, or may be implemented in combination with steps S604 and S605.

Specifically, the first indication information may be implemented in the following several manners.

In an implementation, the first indication information may include two values: a first value (for example, "0") and a second value (for example, " 1").

After the DU completes one LTM handover, the CU receives the second notification message once, and the value of the first indication information changes once. A change manner may be toggling repeatedly between 0 and 1.

For example, before the DU performs step S609, when the CU communicates with the DU through an F1 interface, a current serving cell of the terminal is the cell 1, and the first indication information sent by the CU in step S604 is "0". Similarly, the DU may also locally store the first indication information.

After the DU performs step S609, the DU has completed one LTM handover, a current serving cell of the terminal is the cell 2, and the DU sends the second notification message to the CU. If the terminal is in the cell 2, the CU sends the RRC reconfiguration to the DU again, and the F1 interface message further includes the first indication information, the first indication information is "1". The DU receives the first indication information, and may determine that the RRC reconfiguration corresponds to the cell 2. Therefore, the DU determines to send the RRC reconfiguration to the terminal.

If the DU triggers LTM handover for the second time, and has sent an LTM handover command to the terminal, the CU sends the RRC reconfiguration to the DU again, and the F1 interface message further includes the first indication information, the first indication information is "1". The DU receives the first indication information. In this case, the DU has indicated the terminal to be handed over to another cell (a cell 3), and the DU may determine that the RRC reconfiguration corresponds to the cell 2. Therefore, the DU determines not to send the RRC reconfiguration to the terminal.

In another implementation, the first indication information may be an accumulated value. When first indication information expected by the DU is inconsistent with first indication information sent by the CU, the DU determines not to send the first configuration information to the terminal. For example, after the accumulated value is accumulated to a preset maximum value, the accumulated value may be cleared and re-recorded.

In still another implementation, when the first indication information includes an identifier of the cell before the handover, it indicates that the first configuration information corresponds to the cell of the terminal before the handover, the DU considers that the first configuration information is an invalid or incorrect configuration, and the DU determines not to send the first configuration information to the terminal.

In still another implementation, when the first indication information includes an identifier of the cell after the handover, it indicates that the first configuration information corresponds to the cell of the terminal after the handover, the DU considers that the first configuration information is a valid or correct configuration, and the DU determines to send the first configuration information to the terminal.

In still another implementation, the first indication information includes an F1 application protocol identifier. If the first message includes an F1 application protocol identifier used before the current LTM handover, the DU considers that the first configuration information is an invalid or incorrect configuration; or if the first message includes an F1 application protocol identifier used after the current LTM handover, the DU considers that the first configuration information is a valid or correct configuration.

According to this embodiment, the first message that carries the first configuration information and that is sent by the CU also carries the first indication information, and the first configuration information includes the configuration parameter used by the terminal to communicate with the serving cell, so that the DU can determine, based on the first indication information, whether to send the first configuration information to the terminal. This can avoid a subsequent configuration error of the terminal, and improve reliability of configuration on the terminal.

This embodiment may also be applicable to any communication scenario other than the handover scenario. For example, in a non-handover scenario, the CU sends the first message including the first configuration information and the first indication information to the DU, and the DU may ignore the first indication information, and send the first configuration information to the terminal; or the DU may learn, based on the first indication information, that the first configuration information corresponds to the cell currently serving the terminal, and send the first configuration information to the terminal.

In addition, the first indication information is sent together with the first configuration information, so that the DU can determine, in time based on the first indication information, whether to send the first configuration information to the terminal, and the DU can make an LTM decision in time, to improve timeliness of the LTM decision.

In the foregoing embodiment, the first indication information may be carried in the first message that carries the first configuration information, so that the DU can determine, based on the first indication information, whether to send the first configuration information to the terminal. In the following embodiment, alternatively, the first message that carries the first configuration information may not be changed, and the DU determines, only based on a sequence of receiving the first configuration information (the first message) and sending the second notification message (notifying the CU that the LTM handover is completed), whether to send the first configuration information to the terminal.

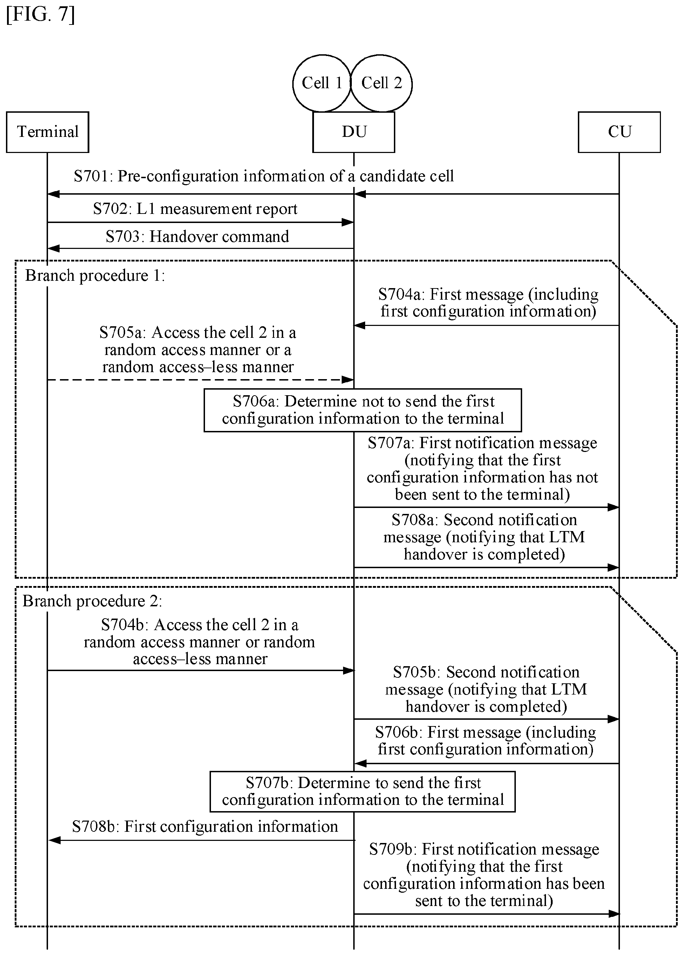

FIG. 7 is a schematic flowchart of still another communication method according to an embodiment of this application. For example, the method may include the following steps.

Step S701. A CU sends pre-configuration information of an LTM candidate cell to a terminal. For a specific implementation of this step, refer to step S301.

Step S702: The terminal measures a reference signal of a current serving cell and/or a candidate cell based on the configuration information, and reports a measurement result to the current serving cell, in other words, sends a layer 1 measurement report (L1 report) to an access network device (a DU in the figure) to which the current serving cell belongs. For a specific implementation of this step, refer to step S302.

Step S703: The DU makes a handover decision based on the L1 measurement result, and sends an LTM handover command to the terminal by using L1/L2 signaling. For a specific implementation of this step, refer to step S303.

In this embodiment, in an LTM handover scenario, if the DU completes the LTM handover, the DU sends a second notification message to the CU, to notify the CU that the terminal has been handed over to a cell. The CU may perform RRC reconfiguration on the terminal when the terminal performs the LTM handover or after the terminal completes the LTM handover.

Because the CU may perform RRC reconfiguration on the terminal when the terminal performs the LTM handover or after the terminal completes the LTM handover, either of the following two branch procedures may be selected to be executed:

Branch procedure 1: When first configuration information is received before the DU sends the second notification message to the DU, the DU determines not to send the first configuration information to the terminal. For example, the following steps may be included.

Step S704a: The CU sends a first message to the DU.

The first message includes the first configuration information. The first configuration information includes a configuration parameter used by the terminal to communicate with the serving cell. For example, the first configuration information may be the foregoing RRC reconfiguration information.

For example, the first message may be an F1 interface message. Further, the F1 interface message may be a terminal context modification request message or another F1 interface message. This is not limited in this embodiment.

For example, the CU may generate the first configuration information of the terminal in a delta configuration (delta configuration) manner. The "delta" may be understood as a part different from a configuration currently applied to the terminal. To be specific, the first configuration information may carry only information about the part different from the configuration currently applied to the terminal. For example, in this embodiment, the CU considers that the current serving cell of the terminal is a cell 1, and therefore the generated first configuration information is a delta configuration based on the cell 1.

Step S705a: The terminal performs the LTM handover, uses the configuration information that is of the candidate cell and that is received in step S701 to access the cell after the handover, and after the access succeeds, starts to perform uplink and downlink data transmission with the cell after the handover. For a specific implementation of this step, refer to step S304.

Step S706a: The DU determines not to send the first configuration information to the terminal.

In this case, the DU has not completed the LTM handover, the DU has not sent the second notification message to the CU to notify the CU that the terminal has successfully completed the LTM handover, the current serving cell of the terminal is the cell 1, and the first configuration information of the CU for the terminal is the configuration parameter used by the terminal to communicate with the serving cell (the cell 1). However, the terminal is to be handed over to the cell 2. Therefore, after receiving the first message sent by the CU, the DU may consider that the first configuration information in the first message is an invalid or incorrect configuration, and the DU determines not to send the first configuration information to the terminal.

In an example, the DU may also locally store an identifier, and the identifier indicates whether the DU has sent the second notification message. For example, if the identifier is "0", it indicates that the DU has not sent the second notification message; or if the identifier is "1", it indicates that the DU has sent the second notification message. In the branch procedure, the DU may detect that the identifier is "0".

Step S707a: The DU sends a first notification message to the CU, where the first notification message notifies that the DU has not sent the first configuration information to the terminal.

After determining not to send the first configuration information to the terminal, the DU may send the first notification message to the CU, to notify the CU that the DU has not sent the first configuration information to the terminal.

Further, the first notification message may further include a second cause value, and the second cause value indicates that the LTM handover is being or is to be performed, or that another process is being executed on the terminal. Therefore, the CU may learn that the terminal is performing the LTM handover, and suspend performing RRC reconfiguration on the terminal.

For example, if the first message is a terminal context modification request message, correspondingly, the first notification message may be a terminal context modification response message or a terminal context modification failure message.

Step S708a: The DU sends the second notification message to the CU, where the second notification message indicates that the terminal has successfully completed the LTM handover. For a specific implementation of this step, refer to step S305.

Branch procedure 2: When first configuration information is received after the DU sends the second notification message to the CU, the DU determines to send the first configuration information to the terminal. For example, the branch procedure may include the following steps.

Step S704b: The terminal performs the LTM handover, uses the configuration information that is of the candidate cell and that is received in step S701 to access the cell after the handover, and after the access succeeds, starts to perform uplink and downlink data transmission with the cell after the handover. For a specific implementation of this step, refer to step S304.

Step S705b: The DU sends the second notification message to the CU, where the second notification message indicates that the terminal has successfully completed the LTM handover. For a specific implementation of this step, refer to step S305.

Step S706b: The CU sends a first message to the DU.

The first message includes the first configuration information. The first configuration information includes a configuration parameter used by the terminal to communicate with the serving cell. For example, the first configuration information may be the foregoing RRC reconfiguration information.

Step S707b: The DU determines to send the first configuration information to the terminal.

In this case, the DU has completed the LTM handover, and the DU has sent the second notification message to the CU to notify the CU that the terminal has successfully completed the LTM handover, in other words, the terminal is in a cell 2 currently, a current serving cell of the terminal is the cell 2, and the first configuration information of the CU for the terminal is the configuration parameter used by the terminal to communicate with the serving cell (the cell 2). Therefore, after receiving the first message sent by the CU, the DU may consider that the first configuration information in the first message is a valid or correct configuration, and the DU determines to send the first configuration information to the terminal.

In an example, the DU may also locally store an identifier, and the identifier indicates whether the DU has sent the second notification message. For example, if the identifier is "0", it indicates that the DU has not sent the second notification message; or if the identifier is "1", it indicates that the DU has sent the second notification message. In the branch procedure, the DU may detect that the identifier is "1".

Step S708b: The DU sends the first configuration information to the terminal.

After determining to send the first configuration information to the terminal, the DU sends the first configuration information in the first message to the terminal.

Step S709b: The DU sends a first notification message to the CU, where the first notification message notifies that the DU has sent the first configuration information to the terminal.

After the DU determines that the first configuration information has been sent to the terminal, the DU may further send the first notification message to the CU, where the first notification message notifies that the DU has sent the first configuration information to the terminal.

According to this embodiment, the DU determines, based on whether the first configuration information is received before or after the second notification message is sent to the CU, whether to send the first configuration information to the terminal. This can avoid a subsequent configuration error of the terminal, and improve reliability of configuration on the terminal.

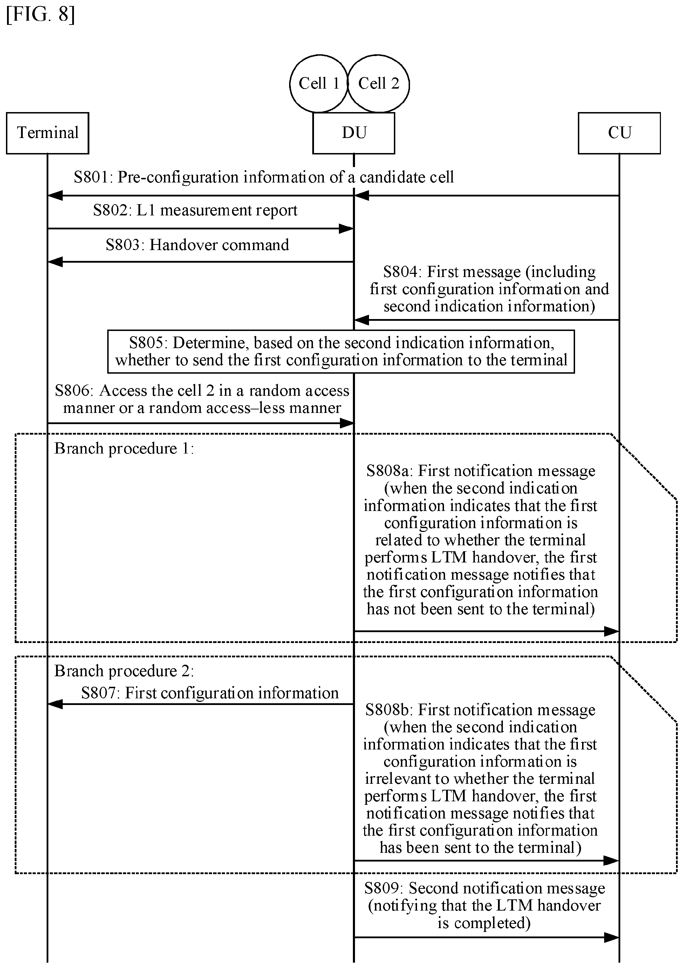

FIG. 8 is a schematic flowchart of still another communication method according to an embodiment of this application. For example, the method may include the following steps.

Step S801: A CU sends pre-configuration information of an LTM candidate cell to a terminal. For a specific implementation of this step, refer to step S301.

Step S802: The terminal measures a reference signal of a current serving cell and/or a candidate cell based on the configuration information, and reports a measurement result to the current serving cell, in other words, sends a layer 1 measurement report (L1 report) to an access network device (a DU in the figure) to which the current serving cell belongs. For a specific implementation of this step, refer to step S302.

Step S803: The DU makes a handover decision based on the L1 measurement result, and sends an LTM handover command to the terminal by using L1/L2 signaling. For a specific implementation of this step, refer to step S303.

Step S804: The CU sends a first message to the DU.

The first message includes first configuration information and second indication information. The first configuration information includes a configuration parameter used by the terminal to communicate with the serving cell. For example, the first configuration information may be the foregoing RRC reconfiguration information.

In this embodiment, before the CU sends the first message to the DU, the CU does not know that the DU sends the handover command to the terminal. To avoid a configuration error of the terminal caused by sending invalid or incorrect configuration information to the terminal, the first message further includes second indication information. The second indication information indicates whether the first configuration information is related to whether the terminal performs LTM handover.

For example, when the first configuration information is an L3 handover command, and the first configuration information includes a full configuration (full configuration) of an L3 handover target cell, the first configuration information is irrelevant to whether the terminal performs the LTM handover.

For another example, when configuration content included in the first configuration message is a part shared by a cell 1 and a cell 2, the first configuration information is irrelevant to whether the terminal performs the LTM handover. For example, a current serving cell of the terminal is the cell 1, and the CU has sent pre-configuration information of a candidate cell (the cell 2) to the terminal by using step S801. Parameters A and B of the cell 1 are different from those of the cell 2, and a parameter C is shared by the cell 1 and the cell 2. When the first configuration information includes the parameter C, the first configuration information is irrelevant to whether the terminal is currently handed over from the cell 1 to the cell 2 through the LTM. In this case, the first configuration information is irrelevant to whether the terminal performs the LTM handover.

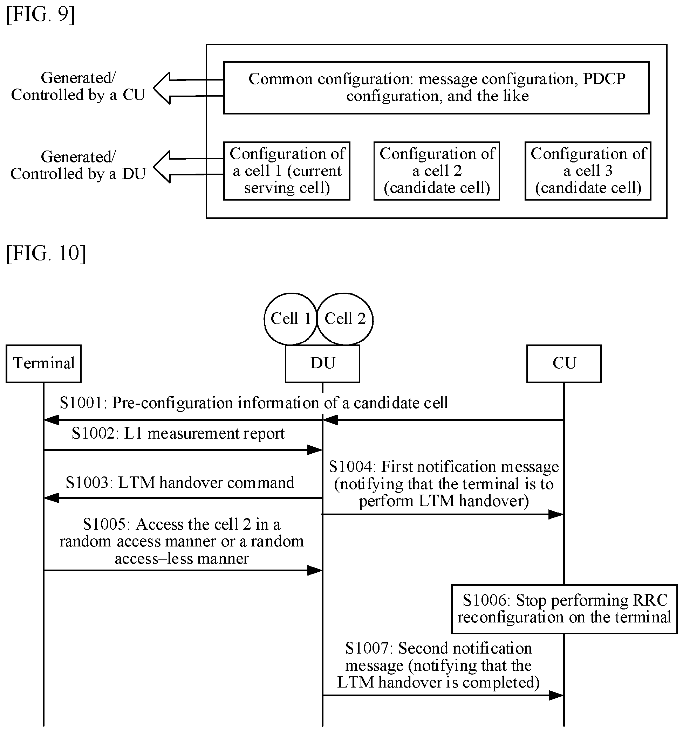

FIG. 9 is a diagram of an example of configuration information according to an embodiment of this application. The pre-configuration information of the candidate cell includes parameters of protocol layers, such as RLC, MAC, and PHY, that are controlled by the DU, and a parameter of a protocol layer (for example, PDCP) controlled by the CU is common for/shared by the current serving cell and the candidate cell. Therefore, when the first configuration information includes the parameter of the protocol layer controlled by the CU, the first configuration information is irrelevant to whether the terminal performs the LTM handover.

For example, the first message may be an F1 interface message. Further, the F1 interface message may be a terminal context modification request message or another F1 interface message. This is not limited in this embodiment.

Step S805: The DU determines, based on the second indication information, whether to send the first configuration information to the terminal.

When the second indication information indicates that the first configuration information is related to whether the terminal performs the LTM handover, the DU determines, based on the second indication information, not to send the first configuration information to the terminal.

When the second indication information indicates that the first configuration information is irrelevant to whether the terminal performs the LTM handover, the DU determines, based on the second indication information, to send the first configuration information to the terminal.

Step S806: The terminal performs the LTM handover, uses the configuration information that is of the candidate cell and that is received in step S801 to access the cell after the handover, and after the access succeeds, starts to perform uplink and downlink data transmission with the cell after the handover. For a specific implementation of this step, refer to step S304.

It may be understood that an execution sequence of the foregoing steps S804, S805, and S806 is not limited in this embodiment.

Further, based on a determining result in step S805, the DU executes the following branch procedure 1 or branch procedure 2.

### Branch procedure 1:

Step S808a: If the second indication information indicates that the first configuration information is related to whether the terminal performs the LTM handover, the DU sends a first notification message to the CU, where the first notification message notifies that the DU has not sent the first configuration information to the terminal.

If the second indication information indicates that the first configuration information is related to whether the terminal performs the LTM handover, and the terminal is currently performing the LTM handover, the DU considers that the first configuration information is invalid or incorrect, and the DU determines not to send the first configuration information to the terminal, and sends the first notification message to the CU, where the first notification message notifies that the DU has not sent the first configuration information to the terminal.

Further, the first notification message may further include a first cause value, and the first cause value indicates that the LTM handover is being or is to be performed, or that another process is being executed on the terminal. Therefore, the CU may learn that the terminal is performing the LTM handover, and suspend performing RRC reconfiguration on the terminal.

### Branch procedure 2:

Step S807: If the second indication information indicates that the first configuration information is irrelevant to whether the terminal performs the LTM handover, the DU sends the first configuration information to the terminal.

If the second indication information indicates that the first configuration information is irrelevant to whether the terminal performs the LTM handover, and the terminal is currently performing the LTM handover, the DU considers that the first configuration information is valid or correct, and sends the first configuration information to the terminal.

Step S808b: The DU sends a first notification message to the CU. The first notification message notifies that the DU has sent the first configuration information to the terminal.

If the DU has sent the first configuration information to the terminal based on the second indication information, the DU may further send the first notification message to the CU, where the first notification message notifies that the DU has sent the first configuration information to the terminal.

For example, when the first message is a terminal context modification request message, the corresponding first notification message may be a terminal context modification response message.

Step S809: The DU sends a second notification message to the CU. The second notification message indicates that the terminal has successfully completed the LTM handover. For a specific implementation of this step, refer to step S305.

According to this embodiment, the first message that carries the first configuration information and that is sent by the CU also carries the second indication information, and the second indication information indicates whether the first configuration information is related to whether the terminal performs the LTM handover, so that the DU can determine, based on the second indication information, whether to send the first configuration information to the terminal. This can avoid a subsequent configuration error of the terminal, and improve reliability of configuration on the terminal.

In addition, the second indication information is sent together with the first configuration information, so that the DU can determine, in time based on the second indication information, whether to send the first configuration information to the terminal, and the DU can make an LTM decision in time, to improve timeliness of the LTM decision.

It may be understood that the embodiments shown in FIG. 6 to FIG. 8 may be implemented separately, or may be implemented in combination. For example, the first message may include the first indication information, or the first message may include the second indication information, or the first message may include the first indication information and the second indication information.

FIG. 10 is a schematic flowchart of still another communication method according to an embodiment of this application. For example, the method may include the following steps.

Step S1001: A CU sends pre-configuration information of an LTM candidate cell to a terminal. For a specific implementation of this step, refer to step S301.

Step S1002: The terminal measures a reference signal of a current serving cell and/or a candidate cell based on the configuration information, and reports a measurement result to the current serving cell, in other words, sends a layer 1 measurement report (L1 report) to an access network device (a DU in the figure) to which the current serving cell belongs. For a specific implementation of this step, refer to step S302.

Step S1003: The DU makes a handover decision based on the L1 measurement result, and sends an LTM handover command to the terminal by using L1/L2 signaling. For a specific implementation of this step, refer to step S303.

Step S1004: The DU sends a first notification message to the CU. The first notification message notifies the CU that the terminal is to perform LTM handover.

After making the handover decision, the DU sends the first notification message to the CU, to notify the CU that the terminal is to perform the LTM handover.

An execution sequence of steps S1003 and S1004 is not limited in this embodiment. The DU may send the first notification message after sending the LTM handover command; or may send the first notification message after sending the LTM handover command; or may simultaneously send the LTM handover command and a second notification message.

For example, the first notification message may include at least one of the following information: a case that the terminal is to perform or is performing the LTM handover, and an identifier of a cell after the handover.

Step S1005: The terminal performs the LTM handover, uses the configuration information that is of the candidate cell and that is received in step S701 to access the cell after the handover, and after the access succeeds, starts to perform uplink and downlink data transmission with the cell after the handover. For a specific implementation of this step, refer to step S304.

Step S1006: The CU stops performing RRC reconfiguration on the terminal.

After receiving the first notification message, the CU knows that the terminal is to perform the LTM handover. If the CU performs RRC configuration on the terminal, a configuration error is caused. Therefore, the CU stops performing RRC reconfiguration on the terminal.

That the CU stops performing RRC reconfiguration on the terminal may be specifically the following behavior: skipping sending an RRC reconfiguration message to the terminal.

The skipping sending an RRC reconfiguration message to the terminal may include: skipping indicating the terminal to perform L3 cell handover, skipping indicating the terminal to perform key update, and the like.

Step S1007: The DU sends a second notification message to the CU. The second notification message indicates that the terminal has successfully completed the LTM handover. For a specific implementation of this step, refer to step S305. After the CU receives the second notification message, when the CU needs to reconfigure configuration information of the terminal device, the CU may start an RRC reconfiguration process, which may be specifically the following behavior: sending the RRC reconfiguration message to the terminal.

An execution sequence of the foregoing steps S1005 to S1007 is not limited in this embodiment.

According to this embodiment, after performing the LTM handover, the DU may send the first notification message to the CU, to notify the CU that the terminal is to perform the LTM handover. After receiving the first notification message, the CU stops performing RRC reconfiguration on the terminal, so that a subsequent configuration error of the terminal can be avoided, and reliability of configuration on the terminal is improved.

This embodiment may be implemented independently, or may be implemented in combination with the foregoing embodiments. When this embodiment is implemented in combination with the foregoing embodiments, for example, in combination with the embodiment shown in FIG. 6, if the CU receives the first notification message, the CU may update the first indication information, where the first indication information indicates that the first configuration information corresponds to the cell of the terminal after the handover. For another example, in combination with the embodiment shown in FIG. 7, if the DU receives the RRC reconfiguration before sending the first notification message, it is considered that the RRC reconfiguration is invalid.

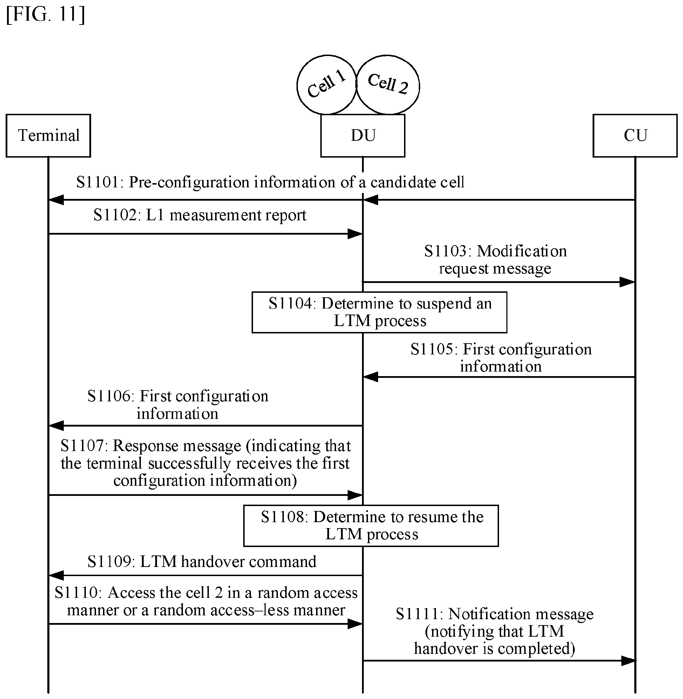

FIG. 11 is a schematic flowchart of still another communication method according to an embodiment of this application. For example, the method may include the following steps.

Step S1101: A CU sends pre-configuration information of an LTM candidate cell to a terminal. For a specific implementation of this step, refer to step S301.

Step S1102: The terminal measures a reference signal of a current serving cell and/or a candidate cell based on the configuration information, and reports a measurement result to the current serving cell, in other words, sends a layer 1 measurement report (L1 report) to an access network device (a DU in the figure) to which the current serving cell belongs. For a specific implementation of this step, refer to step S302.

Step S1103: The DU sends a modification request message to the CU. The modification request message is used to request to modify or update a protocol layer parameter controlled by the DU.

Step S1104: The DU determines to suspend an LTM process.

As shown in the figure, the DU sends the modification request message to the CU, to request the protocol layer parameter controlled by the DU shown in FIG. 9. In this case, the DU may not initiate LTM handover in a next period of time, to avoid an invalid configuration.

Step S1105: The CU sends first configuration information to the DU. The first configuration information includes the protocol layer parameter that is controlled by the DU and that needs to be reconfigured.

After receiving the modification request message, the CU sends, to the DU, configuration information that needs to be reconfigured and that is requested by the DU.

In addition, when the first configuration information includes only a parameter controlled by the CU, the DU does not need to send the modification request message to the CU. Because a protocol layer parameter controlled by the CU is common for or shared by the serving cell and the LTM candidate cell, when receiving the first configuration information, the DU may send the first configuration information to the terminal.

Step S1106: The DU sends the first configuration information to the terminal.

Step S1107: The terminal sends a response message to the DU. The response message indicates that the terminal successfully receives the first configuration information.

Step S1108: After receiving the response message, the DU determines to resume the LTM process.

Alternatively, the terminal may not send the response message to the DU, and after specified time since the DU sends the first configuration information to the terminal, the DU resumes the LTM process.

Step S1109: The DU makes a handover decision based on the L1 measurement result, and sends an LTM handover command to the terminal by using L1/L2 signaling. For a specific implementation of this step, refer to step S303.

Step S1110: The terminal performs the LTM handover, uses the configuration information that is of the candidate cell and that is received in step S701 to access the cell after the handover, and after the access succeeds, starts to perform uplink and downlink data transmission with the cell after the handover. For a specific implementation of this step, refer to step S304.

Step S1111: The DU sends a notification message to the CU, where the notification message indicates that the terminal has successfully completed the LTM handover. For a specific implementation of this step, refer to step S305.

According to this embodiment, the DU determines, based on whether a reconfigured parameter in the first configuration information is initiated by the DU or the CU, whether to send the first configuration information to the terminal device. This can avoid a subsequent configuration error of the terminal, and improve reliability of configuration on the terminal.

In the foregoing embodiment, the DU determines whether to send the first configuration information from the CU to the terminal, to avoid an incorrect configuration. In the following embodiment, the CU controls when the DU can perform LTM.

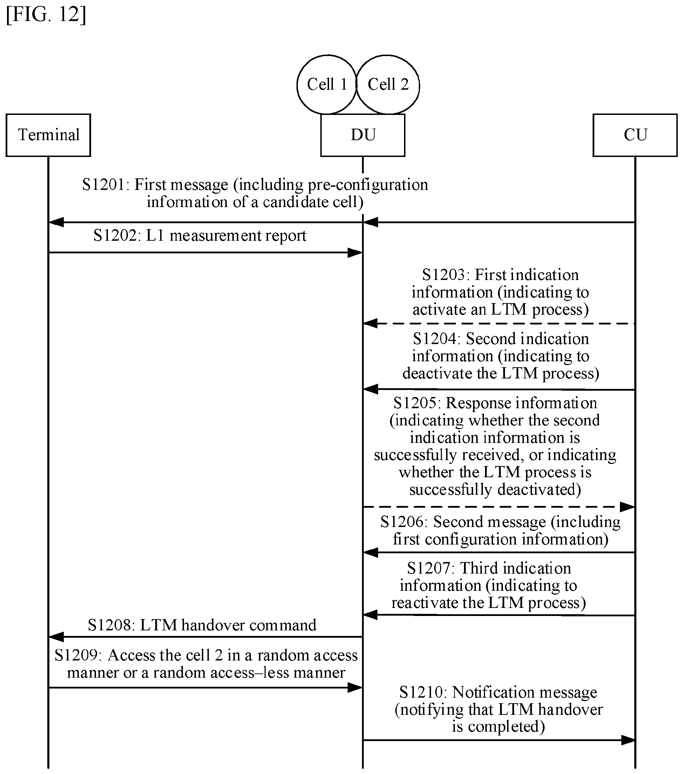

FIG. 12 is a schematic flowchart of still another communication method according to an embodiment of this application. For example, the method may include the following steps.

Step S1201: A CU sends a first message to a terminal.

For example, the CU sends the first message to the terminal through a DU. The first message may be an F1 interface message. The first message may include pre-configuration information of an LTM candidate cell. For a specific implementation of this step, refer to step S301.

Optionally, the first message may further include first indication information, and the first indication information indicates to activate an LTM process. After receiving the first message, the DU parses out the first indication information from the first message, and determines, based on the first indication information, that the LTM process can be subsequently executed]

Step S1202: The terminal measures a reference signal of a current serving cell and/or a candidate cell based on the configuration information, and reports a measurement result to the current serving cell, in other words, sends a layer 1 measurement report (L1 report) to an access network device (the DU in the figure) to which the current serving cell belongs. For a specific implementation of this step, refer to step S302.

After receiving the measurement result, the DU may determine, based on the measurement result, whether to execute the LTM process.

Step S1203: The CU sends the first indication information to the DU. The first indication information indicates to activate the LTM process.

After receiving the first indication information, the DU determines, based on the first indication information, that the LTM process can be subsequently executed.

It may be understood that when the first message includes the first indication information, step S1203 may not be performed. Therefore, this step is optional, and is represented by a dashed line in the figure.

Step S1204: The CU sends second indication information to the DU. The second indication information indicates to deactivate the LTM process.

When the CU is to initiate RRC reconfiguration, to avoid a reconfiguration error caused by handing over the terminal to another cell by the DU through LTM, the CU may send the second indication information to the DU before initiating the reconfiguration, to indicate to deactivate the LTM process. Deactivating the LTM process may also be understood as suspending or terminating the LTM process.

Step S1205: The DU sends response information to the CU. The response information indicates whether the second indication information is successfully received, or indicates whether the LTM process is successfully deactivated.

Certainly, the CU may alternatively consider by default that the DU receives the second indication information. Therefore, this step is optional, and is represented by a dashed line in the figure.

Further, when the DU fails to deactivate an LTM handover decision based on the second indication information of the CU, the response information indicates that the second indication information is not successfully received, or the LTM process is not successfully deactivated.

Further, the response information may further include a third cause value, and the third cause value indicates that the terminal is executing an LTM process. For example, when the second indication information indicates to deactivate the LTM process, but the DU is executing an LTM process, the third cause value may indicate that the terminal is executing an LTM process.

Step S1206: The CU sends a second message to the DU.

The second message includes first configuration information. The first configuration information includes a configuration parameter used by the terminal to communicate with the serving cell. For example, the first configuration information may be the foregoing RRC reconfiguration information.

For example, the first message may be an F1 interface message. Further, the F1 interface message may be a terminal context modification request message or another F1 interface message. This is not limited in this embodiment.

Further, because the CU has deactivated the LTM process, the terminal does not perform cell handover by using an LTM technology within a period of time. The DU considers that the first configuration information is valid or correct, and the DU may send second configuration information to the terminal.

Optionally, the second message may further include third indication information. The third indication information indicates to reactivate the LTM process. After receiving the second message, the DU parses out the third indication information from the second message, and may reactivate the LTM process.

Further, the third indication information may further indicate to reactivate the LTM process after n seconds, where n is a positive integer. Alternatively, the third indication information may further indicate to reactivate the LTM process after the DU successfully sends the first configuration information. For example, when the DU receives a response message indicating that the terminal device successfully receives the first configuration information, it is considered that the first configuration information is successfully sent. In this way, a terminal configuration error can be avoided.

Step S1207: The CU sends the third indication information to the DU. The third indication information indicates to reactivate the LTM process.

After receiving the third indication information, the DU may reactivate the LTM process.

It may be understood that when the second message includes the third indication information, step S1207 may not be performed. Therefore, this step is optional, and is represented by a dashed line in the figure.

Step S1208: The DU makes a handover decision based on the L1 measurement result, and sends an LTM handover command to the terminal by using L1/L2 signaling. For a specific implementation of this step, refer to step S303.

Step S1209: The terminal performs LTM handover, uses the configuration information that is of the candidate cell and that is received in step S1201 to access a cell after the handover, and after the access succeeds, starts to perform uplink and downlink data transmission with the cell after the handover. For a specific implementation of this step, refer to step S304.

Step S1210: The DU sends a notification message to the CU. The notification message indicates that the terminal has successfully completed the LTM handover.

For a specific implementation of this step, refer to step S305, S609, or the like in the foregoing embodiments. Details are not described herein again.

According to this embodiment, the CU controls the DU to perform activation or deactivation of the LTM handover decision, so that a subsequent configuration error of the terminal can be avoided, and reliability of configuration on the terminal is improved.

It should be noted that in the foregoing embodiments, if an execution sequence of the steps is not explicitly limited, the execution sequence of the steps is not limited in this application.

It may be understood that, to implement functions in the foregoing embodiments, the DU and the CU include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

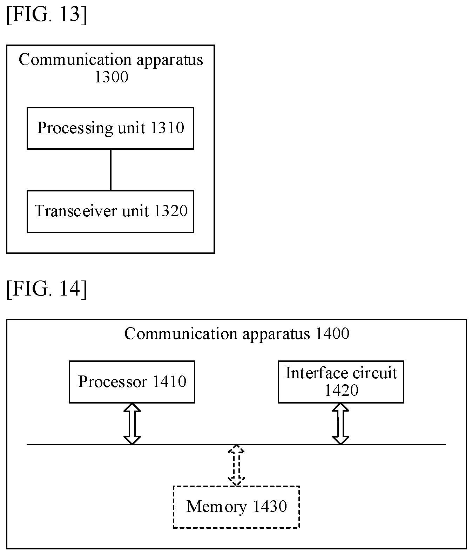

FIG. 13 and FIG. 14 each are a diagram of a structure of a possible communication apparatus according to an embodiment of this application. These communication apparatuses may be configured to implement functions of the CU or the DU in the foregoing method embodiments, and therefore can also implement beneficial effects of the foregoing method embodiments. In embodiments of this application, the communication apparatus may be a CU or a DU, or may be a module (for example, a chip) used in a CU or a DU.

As shown in FIG. 13, a communication apparatus 1300 includes a processing unit 1310 and a transceiver unit 1320. The communication apparatus 1300 is configured to implement functions of the CU or the DU in the method embodiment shown in FIG. 5 to FIG. 8, FIG. 10 and FIG. 11, or FIG. 12.

When the communication apparatus 1300 is configured to implement the functions of the CU in the method embodiment shown in FIG. 5 to FIG. 8, FIG. 10 and FIG. 11, or FIG. 12, the transceiver unit 1320 is configured to perform operations of the CU in steps S501, S503, S504, and S507 in the embodiment shown in FIG. 5, or is configured to perform operations of the CU in steps S604, S608a, S608b, and S609 in the embodiment shown in FIG. 6, or is configured to perform operations of the CU in steps S701, S704a, S707a, S708a, S705b, S706b and S709b in the embodiment shown in FIG. 7, or is configured to perform operations of the CU in steps S801, S804, S808a, S808b, and S809 in the embodiment shown in FIG. 8, or is configured to perform operations of the CU in steps S1001, S1004, and S1007 in the embodiment shown in FIG. 10, or is configured to perform operations of the CU in steps S1103, S1105, and S1111 in the embodiment shown in FIG. 11, or is configured to perform operations of the CU in steps S1203 to S1207 and S1210 in the embodiment shown in FIG. 12; and the processing unit 1310 is configured to perform step S1006 in the embodiment shown in FIG. 10.

When the communication apparatus 1300 is configured to implement the functions of the DU in the method embodiment shown in FIG. 5 to FIG. 8, FIG. 10 and FIG. 11, or FIG. 12, the transceiver unit 1320 is configured to perform operations of the DU in S501 to S507 in the embodiment shown in FIG. 5, or is configured to perform operations of the DU in S601 to S604, S606, S608a, S608b, and S609 in the embodiment shown in FIG. 6, or is configured to perform operations of the DU in S701 to S703, S704a, S705a, S707a, S708a, S704b, S705b, S706b, S708b, and S709b in the embodiment shown in FIG. 7, or is configured to perform operations of the DU in S801 to S804, S806, S808a, S807, S808b, and S809 in the embodiment shown in FIG. 8, or is configured to perform operations of the DU in S1001 to S1005 and S1007 in the embodiment shown in FIG. 10, or is configured to perform operations of the DU in S1101 to S1103, S1105 to S1107, and S1109 to S111 in the embodiment shown in FIG. 11, or is configured to perform operations of the DU in S1201 to S1210 in the embodiment shown in FIG. 12; and the processing unit 1310 is configured to perform an operation of S605 in the embodiment shown in FIG. 6, or is configured to perform operations of S706a and S707b in the embodiment shown in FIG. 7, or is configured to perform an operation of S805 in the embodiment shown in FIG. 8, or is configured to perform operations of S1104 and S1108 in the embodiment shown in FIG. 11.

For more detailed descriptions of the processing unit 1310 and the transceiver unit 1320, directly refer to related descriptions in the method embodiment shown in FIG. 5 to FIG. 8, FIG. 10 and FIG. 11, or FIG. 12. Details are not described herein again.

As shown in FIG. 14, a communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a memory 1430, configured to: store instructions to be executed by the processor 1410, store input data needed by the processor 1410 to run instructions, or store data generated after the processor 1410 runs instructions.

When the communication apparatus 1400 is configured to implement the method of the CU shown in FIG. 5 to FIG. 8, FIG. 10 and FIG. 11, or FIG. 12, the processor 1410 is configured to implement a function of the processing unit 1310, and the interface circuit 1420 is configured to implement a function of the transceiver unit 1320.

When the communication apparatus 1400 is configured to implement the method of the DU shown in FIG. 5 to FIG. 8, FIG. 10 and FIG. 11, or FIG. 12, the processor 1410 is configured to implement a function of the processing unit 1310, and the interface circuit 1420 is configured to implement a function of the transceiver unit 1320.

When the communication apparatus is a chip used in a CU, the chip in the CU implements functions of the CU in the foregoing method embodiments. The chip in the CU receives information from another module (for example, a radio frequency module or an antenna) in the CU, where the information is sent by a network device to the CU. Alternatively, the chip in the CU sends information to another module (for example, a radio frequency module or an antenna) in the CU, where the information is sent by the CU to a network device.

When the communication apparatus is a chip used in a DU, the chip in the DU implements functions of the DU in the foregoing method embodiments. The chip in the DU receives information from another module (for example, a radio frequency module or an antenna) in the DU, where the information is sent by a CU to the DU. Alternatively, the chip in the DU sends information to another module (for example, a radio frequency module or an antenna) in the DU, where the information is sent by the DU to a CU.

It may be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in a DU or a CU. Certainly, the processor and the storage medium may exist as discrete components in the DU or the CU.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or the functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving, by a distributed unit DU, a first message from a central unit CU, wherein the first message comprises first configuration information and first indication information, and the first configuration information comprises a configuration parameter used by a terminal to communicate with a serving cell; and
determining, by the DU based on the first indication information, whether to send the first configuration information to the terminal.

2. The method according to claim 1, wherein before the receiving, by a DU, a first message from a CU, the method further comprises: sending, by the DU, a handover command to the terminal; and
the determining, by the DU based on the first indication information, whether to send the first configuration information to the terminal comprises:
when the first indication information indicates that the first configuration information corresponds to a cell of the terminal before handover, determining, by the DU, not to send the first configuration information to the terminal; or
when the first indication information indicates that the first configuration information corresponds to a cell of the terminal after handover, determining, by the DU, to send the first configuration information to the terminal.

3. The method according to claim 2, wherein the determining, by the DU based on the first indication information, whether to send the first configuration information to the terminal comprises:
when the first indication information comprises an identifier of the cell before the handover, determining, by the DU, not to send the first configuration information to the terminal; or
when the first indication information comprises an identifier of the cell after the handover, determining, by the DU, to send the first configuration information to the terminal.

4. The method according to claim 1 or 2, wherein
when the first indication information is a first value, determining, by the DU, not to send the first configuration information to the terminal; or
when the first indication information is a second value, determining, by the DU, to send the first configuration information to the terminal, wherein
a value of the first indication information is associated with a quantity of times of sending a second notification message, and the second notification message notifies that a handover process is completed; and
a value assignment manner of the first indication information comprises at least one of the following: toggle or accumulation.

5. The method according to claim 4, wherein the second notification message comprises at least one of the following information: an identifier of the cell after the handover and an F1 application protocol identifier.

6. The method according to any one of claims 1 to 5, wherein the method further comprises:
sending, by the DU, a first notification message to the CU, wherein the first notification message notifies whether the first configuration information has been sent to the terminal.

7. A communication method, wherein the method comprises:
receiving, by a distributed unit DU, a first message from a central unit CU, wherein the first message comprises first configuration information, and the first configuration information comprises a configuration parameter used by a terminal to communicate with a serving cell; and
when the first configuration information is received before the DU sends a first notification message to the CU, determining, by the DU, not to send the first configuration information to the terminal; or
when the first configuration information is received after the DU sends a first notification message to the CU, determining, by the DU, to send the first configuration information to the terminal, wherein
the first notification message notifies that the terminal completes handover.

8. The method according to claim 7, wherein the method further comprises:
storing, by the DU, a first identifier, wherein the first identifier is used to record whether the DU has sent the first notification message to the CU.

9. The method according to claim 7 or 8, wherein the method further comprises:
sending, by the DU, a second notification message to the CU, wherein the second notification message notifies whether the first configuration information has been sent to the terminal.

10. A communication method, wherein the method comprises:
receiving, by a distributed unit DU, a layer 1 measurement report from a terminal, and starting a handover process;
sending, by the DU, a modification request message to a central unit CU, wherein
the modification request message is used to request to modify a configuration parameter used by the terminal managed by the DU to communicate with a serving cell;
determining, by the DU, to suspend the handover process; and
receiving, by the DU, first configuration information from the CU, wherein the first configuration information comprises the configuration parameter used by the terminal to communicate with the serving cell.

11. The method according to claim 10, wherein the method further comprises:
sending, by the DU, the first configuration information to the terminal;
receiving, by the DU, a response message from the terminal, wherein the response message indicates that the first configuration information is successfully received; and
determining, by the DU, to resume the handover process.

12. The method according to claim 10 or 11, wherein the method further comprises:
receiving, by the DU, second configuration information from the CU, wherein the second configuration information comprises a parameter managed by the CU; and
determining, by the DU, not to suspend the handover process.

13. A communication method, wherein the method comprises:
sending, by a central unit CU, first indication information to a distributed unit DU, wherein the first indication information indicates to deactivate a handover process; and
sending, by the CU, first configuration information to the DU, wherein the first configuration information comprises a configuration parameter used by a terminal to communicate with a serving cell.

14. The method according to claim 13, wherein after the sending, by a CU, first indication information to a DU, the method further comprises:
receiving response information, wherein the response information indicates whether the first indication information is successfully received, or indicates whether the handover process is successfully deactivated.

15. The method according to claim 14, wherein when the response information indicates that the first indication information is not successfully received, or indicates that the LTM process is not successfully deactivated, the response information comprises a cause value, and the cause value indicates that the terminal is executing the handover process.

16. The method according to any one of claims 13 to 15, wherein after the sending, by the CU, first configuration information to the DU, the method further comprises:
sending, by the CU, second indication information to the DU, wherein the second indication information indicates to reactivate the handover process.

17. The method according to claim 16, wherein the first configuration information and the second indication information are comprised in a first message.

18. A communication apparatus, wherein the apparatus comprises a transceiver unit and a processing unit, wherein
the transceiver unit is configured to receive a first message from a central unit CU, wherein the first message comprises first configuration information and first indication information, and the first configuration information comprises a configuration parameter used by a terminal to communicate with a serving cell; and the processing unit is configured to determine, based on the first indication information, whether to send the first configuration information to the terminal.

19. The apparatus according to claim 18, wherein the transceiver unit is further configured to send a handover command to the terminal; and
the processing unit is further configured to: when the first indication information indicates that the first configuration information corresponds to a cell of the terminal before handover, determine not to send the first configuration information to the terminal; or
the processing unit is further configured to: when the first indication information indicates that the first configuration information corresponds to a cell of the terminal after handover, determine to send the first configuration information to the terminal.

20. The apparatus according to claim 19, wherein
the processing unit is further configured to: when the first indication information comprises an identifier of the cell before the handover, determine not to send the first configuration information to the terminal; or
the processing unit is further configured to: when the first indication information comprises an identifier of the cell after the handover, determine to send the first configuration information to the terminal.

21. The apparatus according to claim 18 or 19, wherein
the processing unit is further configured to: when the first indication information is a first value, determine not to send the first configuration information to the terminal; or
the processing unit is further configured to: when the first indication information is a second value, determine to send the first configuration information to the terminal, wherein
a value of the first indication information is associated with a quantity of times of sending a second notification message, and the second notification message notifies that a handover process is completed; and
a value assignment manner of the first indication information comprises at least one of the following: toggle and accumulation.

22. The apparatus according to claim 21, wherein the second notification message comprises at least one of the following information: an identifier of the cell after the handover and an F1 application protocol identifier.

23. The apparatus according to any one of claims 18 to 22, wherein the transceiver unit is further configured to send a first notification message to the CU, wherein the first notification message notifies whether the first configuration information has been sent to the terminal.

24. A communication apparatus, wherein the apparatus comprises a transceiver unit and
a processing unit, wherein
the transceiver unit is configured to receive a first message from a central unit CU, wherein the first message comprises first configuration information, and the first configuration information comprises a configuration parameter used by a terminal to communicate with a serving cell; and
the processing unit is configured to: when the first configuration information is received before the DU sends a first notification message to the CU, determine not to send the first configuration information to the terminal; or
the processing unit is configured to: when the first configuration information is received after the DU sends a first notification message to the CU, determine to send the first configuration information to the terminal, wherein
the first notification message notifies that the terminal completes handover.

25. The apparatus according to claim 24, wherein the processing unit is further configured to store a first identifier, wherein the first identifier is used to record whether the DU has sent the first notification message to the CU.

26. The apparatus according to claim 24 or 25, wherein the transceiver unit is further configured to send a second notification message to the CU, wherein the second notification message notifies whether the first configuration information has been sent to the terminal.

27. A communication apparatus, wherein the apparatus comprises a transceiver unit and a processing unit, wherein
the transceiver unit is configured to receive a layer 1 measurement report from a terminal, and start a handover process;
the transceiver unit is further configured to send a modification request message to a central unit CU, wherein the modification request message is used to request to modify a configuration parameter used by the terminal managed by the DU to communicate with a serving cell;
the processing unit is configured to determine to suspend the handover process; and the transceiver unit is further configured to receive first configuration information from the CU, wherein the first configuration information comprises the configuration parameter used by the terminal to communicate with the serving cell.

28. The apparatus according to claim 27, wherein
the transceiver unit is further configured to send the first configuration information to the terminal;
the transceiver unit is further configured to receive a response message from the terminal, wherein the response message indicates that the first configuration information is successfully received; and
the processing unit is further configured to determine to resume the handover process.

29. The apparatus according to claim 27 or 28, wherein
the transceiver unit is further configured to receive second configuration information from the CU, wherein the second configuration information comprises a parameter managed by the CU; and
the processing unit is further configured to determine not to suspend the handover process.

30. A communication apparatus, wherein the apparatus comprises a transceiver unit, wherein
the transceiver unit is configured to send first indication information to a distributed unit DU, wherein the first indication information indicates to deactivate a handover process; and
the transceiver unit is further configured to send first configuration information to the DU, wherein the first configuration information comprises a configuration parameter used by a terminal to communicate with a serving cell.

31. The apparatus according to claim 30, wherein the transceiver unit is further configured to receive response information, wherein the response information indicates whether the first indication information is successfully received, or indicates whether the handover process is successfully deactivated.

32. The apparatus according to claim 31, wherein when the response information indicates that the first indication information is not successfully received, or indicates that the LTM process is not successfully deactivated, the response information comprises a cause value, and the cause value indicates that the terminal is executing the handover process.

33. The apparatus according to any one of claims 30 to 32, wherein the transceiver unit is further configured to send second indication information to the DU, wherein the second indication information indicates to reactivate the handover process.

34. The apparatus according to claim 33, wherein the first configuration information and the second indication information are comprised in a first message.

35. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 17 by using a logic circuit or by executing code instructions.

36. A computer-readable storage medium, wherein the storage medium stores a computer program or instructions, and when the computer program or the instructions are executed by a communication apparatus, the method according to any one of claims 1 to 17 is implemented.
